Europäisches Patentamt

European Patent Office

Office européen des brevets

(11) Veröffentlichungsnummer: **0 176 994 B1**

## EUROPÄISCHE PATENTSCHRIFT

(45) Veröffentlichungstag der Patentschrift: **09.12.92**

(51) Int. Cl.⁵: **G01S  13/02**, H01Q 15/14

(21) Anmeldenummer: **85112320.8**

(22) Anmeldetag: **28.09.85**

(54) **Radarerfassbares Objekt mit verbesserter Radarreflexion.**

(30) Priorität: **02.10.84 DE 3436063**

(43) Veröffentlichungstag der Anmeldung:
**09.04.86 Patentblatt  86/15**

(45) Bekanntmachung des Hinweises auf die
Patenterteilung:
**09.12.92 Patentblatt  92/50**

(84) Benannte Vertragsstaaten:
**BE CH DE FR GB IT LI NL SE**

(56) Entgegenhaltungen:
EP-A- 0 106 242       WO-A-84/01242
US-A- 2 045 987       US-A- 2 840 819
US-A- 3 148 370       US-A- 3 487 410
US-A- 3 514 781       US-A- 3 529 794
US-A- 4 345 254

(73) Patentinhaber: **AUTOFLUG GMBH
Industriestrasse 10 Postfach 1180
W-2084 Rellingen(DE)**

(72) Erfinder: **Pfabe, Peter, Dipl.-Ing.
Ouadenweg 51
W-2000 Hamburg 61(DE)**

(74) Vertreter: **Müller, Karl-Ernst, Dr. et al
Patentanwälte Becker & Müller Eisenhüttenstrasse 2
W-4030 Ratingen 1(DE)**

# Beschreibung

Die Erfindung betrifft ein radarerfaßbares Objekt mit auf ihm in einer Richtung fortlaufend angeordneten, voneinander beabstandeten Einzelelementen aus leitendem Material, deren Abstand in Abhängigkeit von der durch die Suchfrequenz eines Radargerätes bestimmten Wellenlänge der zu reflektierenden Radarstrahlung festgelegt ist.

Ein gattungsgemäßes radarerfaßbares Objekt in der Form eines faltbaren, flexiblen Radarreflektors ist in der EP-A-0 106 242 beschrieben, bei welchem auf einer Grundfläche eine gitterartige Struktur von metallisierten und dabei leitenden Einzelelementen angeordnet ist. Der Abstand der Einzelelemente zueinander ist jeweils gleichbleibend und soll nach einem Ausführungsbeispiel 0,5 bis 5 Wellenlängen der zu reflektierenden Radarstrahlung betragen.

Mit dem bekannten radarerfaßbaren Objekt ist der Nachteil verbunden, daß die erreichte Verbesserung der Reflexion noch nicht ausreichend ist, insbesondere weil sich die Reflexionsverbesserung nur bei einer festgelegten Wellenlänge der Suchfrequenz eines Radargerätes einstellt, wobei jedoch üblicherweise ein Radargerät nicht mit einer einfachen Suchfrequenz, sondern mit einem Suchfrequenzband arbeitet.

Eine vergleichbare Anordnung bei einem radarerfaßbaren Objekt mit einer gitterartigen Struktur von leitenden Einzelelementen ergibt sich auch aus der US-A-3 148 370; dazu ist angegeben, daß die Abmessung wie auch der Abstand der Einzelelemente die Frequenzcharakteristik der so bestückten Fläche des Objektes und damit dessen Reflexionseigenschaften festlegen, und es ist vorgeschlagen, auf verschiedenen Abschnitten eines einzelnen radarerfaßbaren Objektes in sich gleichbleibende Gitterstrukturen mit unterschiedlich festgelegten Abständen der Einzelelemente anzuordnen. Damit wird zwar erreicht, daß das Objekt mit mehreren einzelnen Suchfrequenzen besser erfaßbar ist, jedoch erstreckt sich die Verbesserung der Radarreflexion immer nur auf einen bestimmten Teil des radarerfaßbaren Objektes. Auch ist die Anpassung an ein Suchfrequenzband bei diesem Stand der Technik nicht angesprochen.

Der Erfindung liegt daher die Aufgabe zugrunde, ein gattungsgemäßes radarerfaßbares Objekt derart zu verbessern, daß sich auch bei einem auf einem Suchfrequenzband arbeitenden Radargerät eine Verbesserung der Reflexion bei dem Objekt einstellt.

Die Lösung dieser Aufgabe ergibt sich aus dem Hauptanspruch; vorteilhafte Ausgestaltungen und Weiterbildungen der Erfindung sind in den Unteransprüchen angegeben.

Die Erfindung sieht vor, daß der Abstand der Einzelelemente beginnend mit der halben, der unteren Eckfrequenz des Suchfrequenzbandes des Radargerätes entsprechenden Wellenlänge nach einer geometrischen Reihe abnehmend bis zur halben, der oberen Eckfrequenz des Frequenzbandes entsprechenden Wellenlänge bemessen ist. Hierdurch wird in vorteilhafter Weise sichergestellt, daß jeder Einzelfrequenz innerhalb des Suchfrequenzbandes des Radargerätes eine entsprechende Abstandsgröße der benachbarten leitenden Einzelelemente entspricht, welche insgesamt zu einer Gesamtverstärkung der Radarreflexion führt.

Weiterhin mit besonderen Vorteilen verbunden ist die bei einem Ausführungsbeispiel der Erfindung vorgesehene Möglichkeit, durch Wahl einer tieferen Eckfrequenz auch für eine gleichbleibend gute Reflexion bei sich änderndem Aspektwinkel zu sorgen.

Eine weitere vorteilhafte Ausführungsform der Erfindung sieht vor, auf dem einen Objekt wenigstens zwei Abfolgen von Einzelelementen ineinander verschachtelt anzuordnen, wobei jede einzelne Abfolge von Einzelelementen in ihrem Abstand der durch das zugeordnete Suchfrequenzband bestimmten geometrischen Reihe entspricht und für die Berechnung der Abstände der Einzelelemente ein ganzzahliges Vielfaches der jeweiligen kleinsten und größten Wellenlänge eines Frequenzbandes zugrundegelegt ist.

Eine netzartige Anordnung der Einzelfäden kann dabei unmittelbar auf dem Objekt aufgebracht sein, indem die Einzelfäden auf der Oberfläche des Objektes selbst angeordnet sind. Nach einem bevorzugten Ausführungsbeispiel der Erfindung wird jedoch die gewebeartige Anordnung in ein Grundgewebe als Träger eingewirkt, so daß das so entstandene radarreflektierende Gewebe auf der Oberfläche eines Objektes anbringbar ist beziehungsweise das radarerfaßbare Objekt selbst unmittelbar aus einem entsprechenden Gewebe hergestellt werden kann.

Besondere Verwendungsformen ergeben sich dabei hinsichtlich Luftzieldarstellungen aller Art, wie insbesondere Luftziel-Schleppsäcke, Schleppfahnen und Schlepppfeile sowie bei Fallschirmen, Rettungsinseln oder sogenannten Kornerreflektoren, um nur einige Verwendungsformen herauszuheben. Die Erfindung ist jedoch nicht auf die vorgenannten Verwendungen beschränkt, sondern erstreckt sich im Prinzip auf alle zwei- oder dreidimensionalen Körper, deren Radarreflexion verbessert werden soll, und an denen gestaffelt Einzelelemente aus leitendem Material angeordnet werden können.

Da im Hinblick auf eine gute Reflexion die Polarisation des Senders mit der Polarisation der Einzelelemente identisch sein muß, was bedeutet, daß bei einer vertikalen Polarisation der hochfrequenten Strahlung auch die leitenden Einzelelemente vertikal angeordnet sein müssen, ist es insbesondere im Hinblick auf die vorstehend genannten Verwendungen, bei denen es aufgrund der Objektbewegungen auch zu einer waagerechten und/oder horizontalen oder dazwischenliegenden Ausrichtung der Einzelelemente kommt, als besonders vorteilhafte Ausführungsform anzusehen, wenn wenigstens zwei jeweils gleich polarisierte Elementanordnungen sich gitterartig kreuzend angeordnet sind. Auf diese Art ist in vorteilhafter Weise gewährleistet, daß sich bei den Bewegungen des Objektes die Polarisationen von leitenden Elementen und Sender immer wieder zeitweilig decken.

In der Zeichnung sind Ausführungsbeispiele der Erfindung wiedergegeben, welche nachstehend erläutert werden. Es zeigen :
Fig. 1a Fig. 1b
in schematischer Weise eine gestaffelte Anordnung von leitenden Einzelelementen für ein Frequenzband,
Fig. 2
eine Ansicht von zwei sich gitterartig kreuzenden netzartigen Anordnungen,
Fig.3
die Verwendung der netzartigen Anordnung bei einer Schleppfahne,
Fig. 4
die Verwendung der netzartigen Anordnung bei einem Schleppfeil,
Fig. 5
die Verwendung der gewebeartigen Anordnung bei einem Fallschirm,
Fig. 6
die Verwendung der gewebeartigen Anordnung bei einem Kornerreflektor,
Fig. 7
die Verwendung der gewebeartigen Anordnung bei einer Rettungsinsel.

Bevor auf die Ausführungsbeispiele gemäß der Zeichnung eingegangen ist, seien zunächst die Berechnungsgrundlagen der Erfindung erläutert.

Ausgegangen ist zunächst von einer gewebeartigen Anordnung, bei welcher die leitenden Einzelelemente in einem Abstand von der halben, der Suchfrequenz entsprechenden Wellenlänge angeordnet sind. Wie schon ausgeführt, erfolgt bei einer derartigen Anordnung eine additive Verstärkung der Rückstrahlung in Abhängigkeit von der Anzahl der Einzelelemente, welche wiederum von der zur Verfügung stehenden Länge des zu erfassenden Objektes abhängig ist. In diesem Zusammenhang kann es zweckmäßig sein, daß mittels eines Zugrundelegens von jeweils einem ganzzahligen Vielfachen der betreffenden Wellenlänge generell eine Vergrößerung des Abstandes vorgenommen werden kann, insbesondere um von sonst sehr kleinen und technisch nur mit großem Aufwand herstellbaren Abständen von leitenden Einzelelementen hin zu besser zu verwirklichenden größeren Abständen zu kommen.

Ein weiteres Ausführungsbeispiel bezieht sich auf den Einsatz wenigstens eines Frequenzbandes zum Auffinden des Objektes und die damit verbundene Verbesserung des Reflexionsverhaltens. Als Beispiel genannt sei hier das sogenannte X-Band mit einer oberen Eckfrequenz von 9,6 Gigaherz entsprechend einer unteren Wellenlänge von 3,172 Zentimetern und einer unteren Eckfrequenz von 8,5 Gigaherz entsprechend einer oberen Wellenlänge von 3,531 Zentimetern. Als erster Schritt für die Berechnung der geometrischen Abstandsreihe ist dabei zunächst die Anzahl der erforderlichen Einzelelemente in Abhängigkeit von den beiden Eckfrequenzen bzw. ihren entsprechenden Wellenlängen zu ermitteln. Hierzu ist zu der Zahl 2 der Quotient aus zwei Logarithmen zu addieren, wobei als Dividend der Logarithmus des Verhältniswertes von oberer zu unterer Wellenlänge einzusetzen ist und als Divisor der Logarithmus des Wertes, der sich aus dem rechnerischen Verhältnis von der Gesamtlänge des Objektes abzüglich der halben unteren Wellenlänge zu der Gesamtlänge abzüglich der halben oberen Wellenlänge ergibt.

Der Abstand des jeweiligen i-ten Einzelelementes innerhalb einer geometrischen Abstandsreihe der zuvor errechneten Gesamtzahl der Einzelelemente ergibt sich sodann durch Multiplikation der halben unteren Wellenlänge mit einem Wert, der sich ergibt, indem der rechnerische Verhältniswert von oberer zu unterer Wellenlänge als Basis mit dem Quotienten aus der um die Zahl 1 verminderten Stellenbezeichnung des gesuchten Einzelelementes und der um die Zahl 1 verminderten Gesamtzahl der Einzelelemente als Exponent potenziert wird. Die bezogen auf ein bestimmtes i-tes Einzelelement innerhalb der geometrischen Reihe entsprechende Wellenlänge entspricht sodann dem doppelten, für das betreffende Einzelelement berechneten Abstand.

Aufgrund der vorstehenden Berechnungsgrundlagen lassen sich in Tabellenform für sämtliche Einzelelemente innerhalb der berechneten Gesamtzahl die zugehörigen Abstände berechnen, und zwar bis die festgelegte und durch die Gesamtlänge des Objektes begrenzte Gesamtzahl der Einzelelemente erreicht ist.

Insbesondere bei relativer Bewegung von Radarsender und Objekt zueinander tritt das Problem auf, daß sich aufgrund des zwischen Objektachse und Sender auftretenden und sich ständig ändernden Aspektwinkels die Laufzeiten der ausgesendeten Strahlen zu den am Objekt befindlichen Einzelelementen verändern, wobei die Laufzeit mit beispielsweise sich vergrößerndem Aspektwinkel kürzer wird. Das hat zur Folge, daß die an sich mit der Erfindung erreichte additive Verstärkung der Rückstrahlung beeinträchtigt wird. Um diesem Umstand abzuhelfen, ist nach einem weiteren Ausführungsbeispiel der Erfindung vorgesehen, im Anschluß an den für das jeweilige Frequenzband berechneten Bereich von Einzelelementen einen weiteren Bereich von Einzelelementen anzuhängen, deren Abstand um den Betrag des Cosinus des jeweiligen Aspektwinkels vergrößert ist, so daß die Laufzeitverkürzung der Strahlen durch eine Abstandsvergrößerung entsprechend ausgeglichen wird.

Zweckmäßigerweise wird der für den Aspektwinkel erforderliche Vorhalt an Einzelelementen dadurch berücksichtigt, daß die einem bestimmten Grenz-Aspektwinkel entsprechende niedrigere Frequenz als untere, gedachte Eckfrequenz des für die Berechnung ausgewählten Frequenzbandes in die Berechnung Eingang findet, wobei der Rechengang als solcher, wie zuvor beschrieben, jedoch unverändert bleibt.

Da häufig auch eine Erfassung der Objekte nicht nur mit einem, sondern mit zwei oder mehr Suchfrequenzbändern in Frage kommt, ist nach einem weiteren Ausführungsbeispiel der Erfindung vorgesehen, die berechneten, jeweils nach dem Bild einer eigenen geometrischen Reihe ansteigenden Abstände der Einzelelemente bezogen auf wenigstens zwei Frequenzbänder ineinanderzuschachteln, so daß sich auf ein- und derselben Gesamtlänge eines Objektes für wenigstens zwei Frequenzbänder zutreffende Abstandsbereiche der Einzelelemente ergeben. Maßgeblich hierfür ist eine zweckmäßige Auswahl eines ganzzahligen Vielfachen der halben Wellenlänge der jeweilig einzusetzenden oberen und unteren Eckfrequenz des in Rede stehenden Frequenzbandes, mit welchem sodann in die zuvor erläuterte Berechnung der Abstände einzutreten ist.

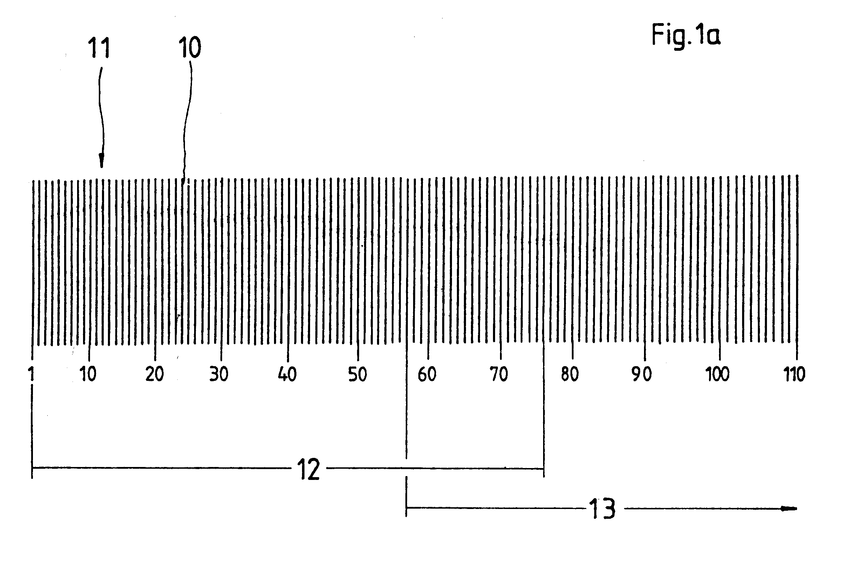

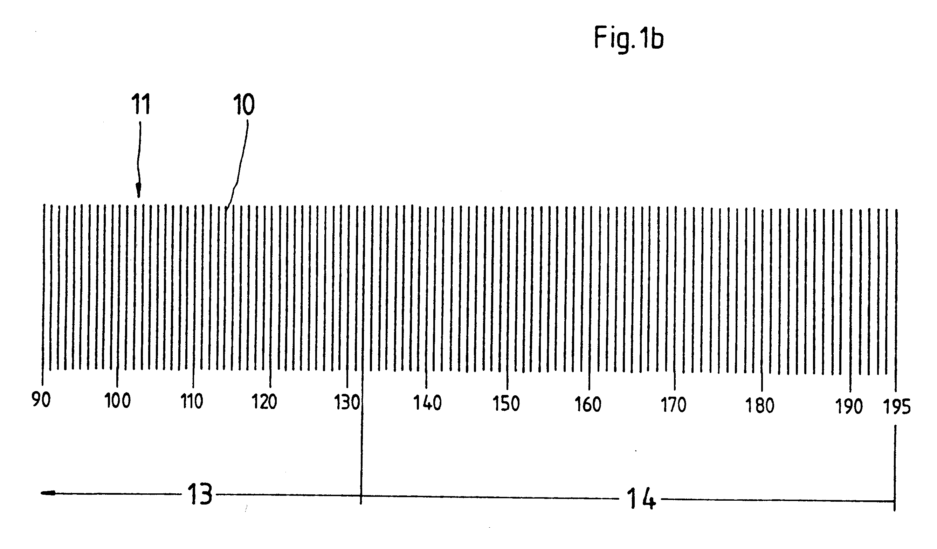

Ein Beispiel aus welchem sich alle zuvor erörterten Ausführungsformen der Erfindung einzeln für sich entnehmen lassen, ist in Figur 1 wiedergegeben, welche aus Gründen der Darstellung in sich überlappende Figuren 1a sowie 1b aufgeteilt ist. Grundlage ist die Darstellung von 195 Einzelelementen 10 auf einem als Objekt 11 ausgewählten Gefechtsziel-Luftschleppsack mit einer Gesamtlänge von 360 Zentimetern. Hierfür wurde zunächst das sogenannte X-Band mit einer oberen Eckfrequenz von 9,6 Gigaherz und einer unteren Eckfrequenz von 8,5 Gigaherz zugrundegelegt, mit entsprechenden Wellenlängen von 3,172 Zentimetern bzw. 3,531 Zentimetern. Um genügend Reserve für eine Verbesserung der Radarreflexion auch bei ansteigendem Aspektwinkel zur Verfügung zu haben, wurde in die Berechnung eine wesentlich tiefere Eckfrequenz von nur 7 Gigaherz, entsprechend einer Wellenlänge von 4,3 Zentimetern, als gedachte untere Eckfrequenz eingeführt. Entsprechend der vorstehend erläuterten Berechnungsgrundlagen ergibt sich nach Iterieren eine Gesamtzahl von 195 Einzelelementen 10 für den 360 Zentimeter langen Schleppsack, beginnend mit einem Abstand von 1,586 Zentimetern für die ersten beiden Einzelelemente 10, welcher der halben unteren Wellenlänge des X-Bandes entspricht. Die letzten beiden der 195 Einzelelemente 10 weisen einen der halben oberen Wellenlänge bezogen auf die gedachte untere Eckfrequenz entsprechenden Abstand von 2,15 Zentimetern auf. Das eigentliche X-Band ist gekennzeichnet durch den Bereich 12 und umfaßt dabei nur den Bereich bis zum Abstand von 1,76 Zentimetern, welcher der halben Wellenlänge bezogen auf die tatsächliche untere Eckfrequenz von 8,5 Gigaherz des X-Bandes entspricht. Dieser Abstand ist beim 76. Einzelelement 10 erreicht.

Als weiteres Frequenzband soll das sogenannte KU-Band mit einer oberen Eckfrequenz von 17,5 Gigaherz und einer unteren Eckfrequenz von 15,5 Gigaherz abgedeckt werden. Die dementsprechenden Wellenlängen von 1,741 Zentimetern und 1,935 Zentimetern, von denen jeweils nur die Hälfte für die Berechnung anzunehmen ist, bedeuten, daß die dementsprechenden Einzelelemente 10 mit einem Abstand unterhalb von 1 Zentimeter nicht in den Bereich 12 für das X-Band zu integrieren wären, welcher ja erst mit einem Abstand von 1,586 Zentimetern beginnt. Abhilfe schafft hier das Einsetzen eines in diesem Fall doppelten Wertes für die halbe Wellenlänge des KU-Bandes, so daß sich ein Bereich 13 für das KU-Band vom 57. Einzelelement mit einem Abstand von 1,741 Zentimetern bis zum 132. Einzelelement mit einem Abstand von 1,935 Zentimetern ergibt.

Die bezogen auf die zur Verfügung stehende Gesamtzahl an Einzelelementen noch verbleibenden 63 Einzelelemente im Bereich 14 bilden die Reserve für die auftretenden Aspektwinkel.

Es ergibt sich daraus insbesondere, daß mittels eines Zugrundelegens von jeweils einem ganzzahligen Vielfachen der betreffenden Wellenlänge generell eine Verschiebung der Abstandsbereiche vorgenommen werden kann, insbesondere um von sehr kleinen und technisch nur mit großem Aufwand herstellbaren Abständen von Einzelelementen 10 hin zu besser zu verwirklichenden größeren Abständen zu kommen.

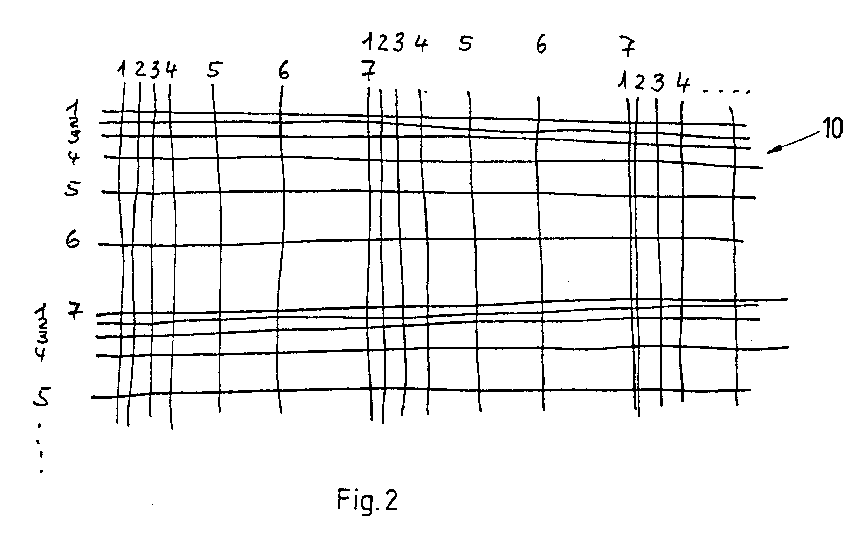

Wie aus Figur 2 ersichtlich, sind die Einzelelemente 10 auch gitterartig, sich im rechten Winkel kreuzend angeordnet, wobei mit den Ziffern 1 bis 7 jeweils die zu einer frequenzbandbezogenen Anordnung gehörenden Einzelelemente bezeichnet sind. Der sich nach Art einer geometrischen Reihe vergrößernde Abstand ist deutlich erkennbar, wobei die Ziffer 1 das Einzelelement für die obere Eckfrequenz und die Ziffer 7 dasjenige für die untere Eckfrequenz bezeichnen.

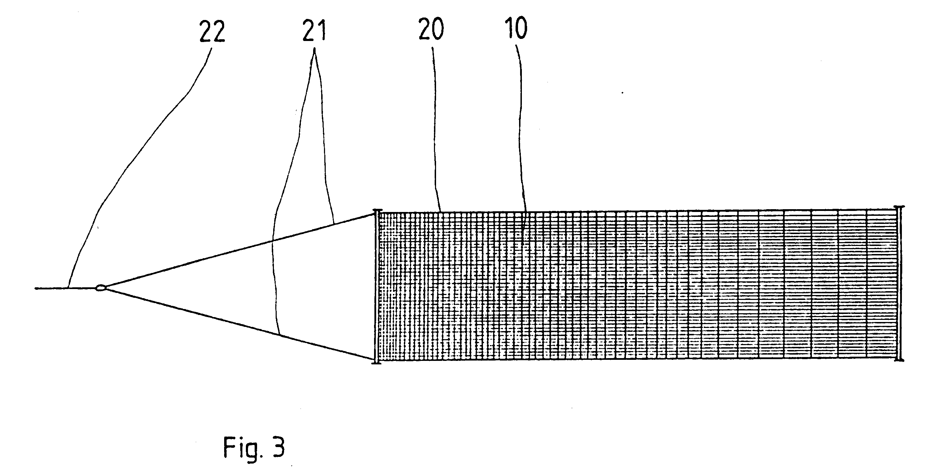

In den weiteren Figuren sind Beispiele für die Verwendung der gewebeartigen Einzelelemente 10 gezeigt. So ist in Figur 3 eine Schleppfahne 20 dargestellt, bei welcher Einzelelemente 10 im Hinblick auf die Radarerfassung für ein Frequenzband angeordnet sind. Die Schleppfahne 20 wird über zwei in einem Punkt zusammengeführte Zugleinen 21 und eine daran anschließende Schleppleine 22 von einem nicht dargestellten Schleppflugzeug bewegt.

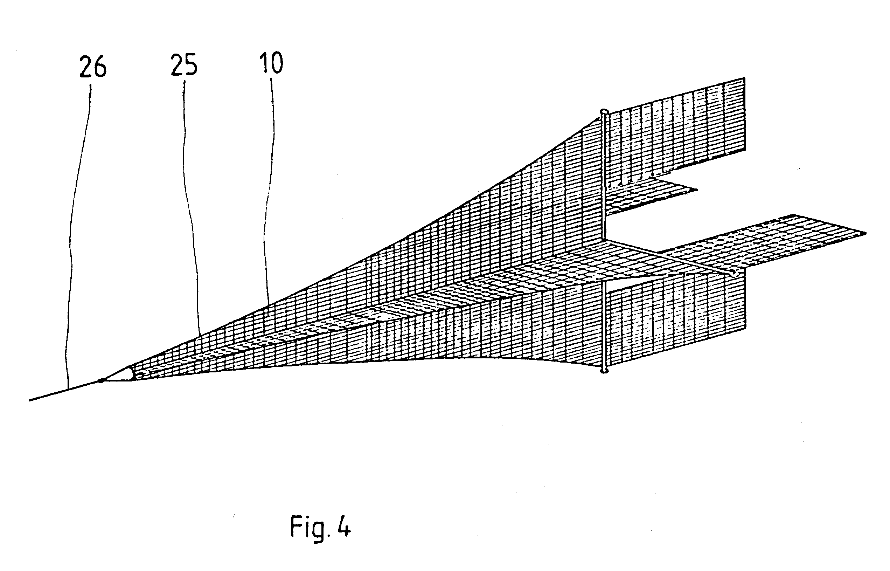

Eine entsprechende Anordnung der Einzelelemente 10 findet sich in der Darstellung gemäß Figur 4 bei einem Schlepppfeil 25, welcher über eine Schleppleine 26 gezogen wird.

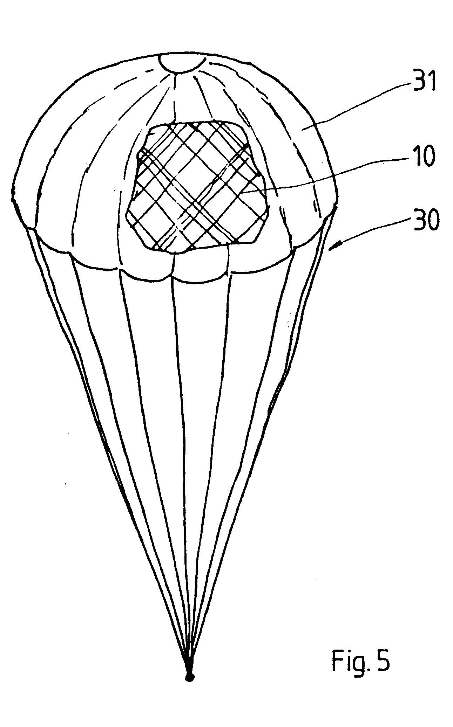

In Figur 5 ist ein Fallschirm 30 dargestellt, bei welchem in einem Ausschnitt deutlich die Anordnung der Einzelelemente 10 im Bereich des Materials der Fallschirmkappe 31 zu erkennen ist. Wegen der unbestimmten Suchrichtung des Radars findet hier eine gitterartige Anordnung der Einzelelemente 10 gemäß Figur 2 Anwendung.

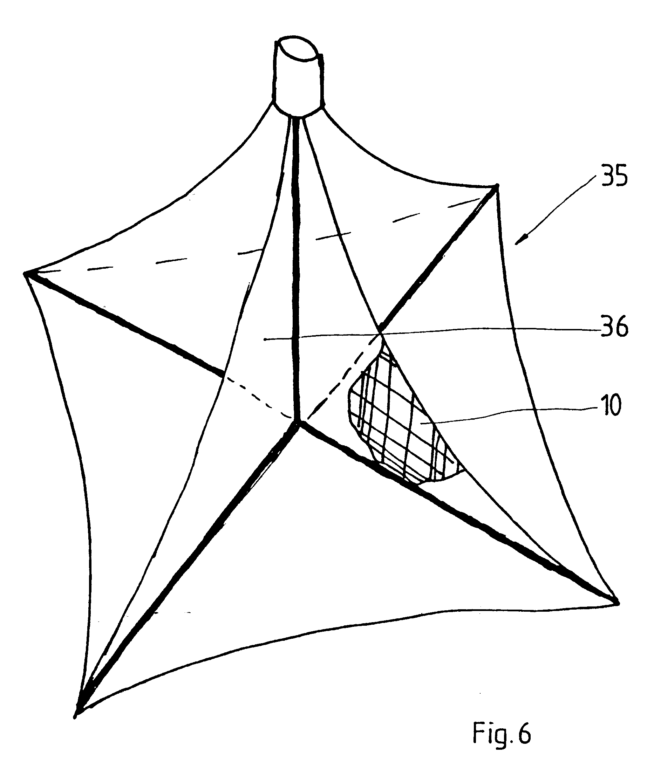

Bei dem in Figur 6 wiedergegebenen Kornerreflektor 35 besteht das Problem,daß bei Anstrahlung in Längsrichtung der Wände 36 keine oder nur eine sehr geringe Rückstrahlung auftritt, während bei Strahlung in den Mittenbereich der Öffnung des Korners 35 ein absolutes Maximum an Rückstrahlung zu vermerken ist. Durch Anordnung der erfindungsgemäß gestaffelten Gitterstruktur von Einzelelementen 10 in den Wänden 36 wird die Rückstrahlung in diesem Bereich deutlich verbessert.

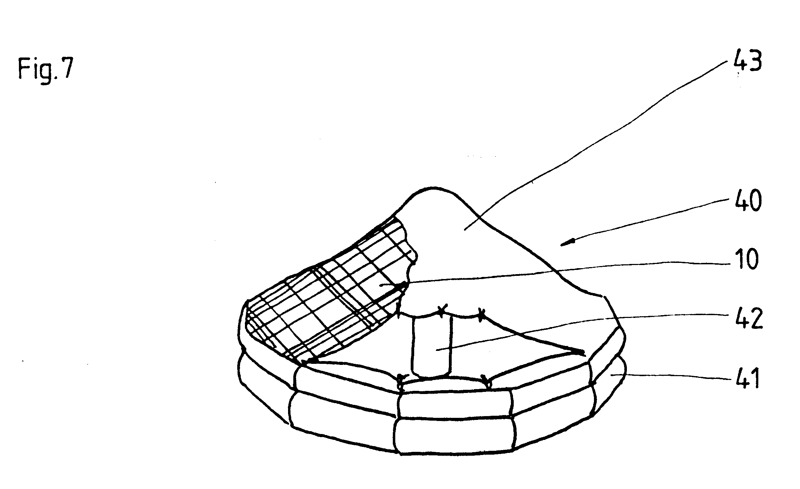

Ein weiteres Verwendungsbeispiel hinsichtlich der Radarreflexion zu Wasser gibt Figur 7 wieder, in welcher schematisch eine Rettungsinsel 40 mit Inselrumpf 41, einer Dachstütze 42 sowie einem allseits geschlossenen, zeltartigen Dach 43 dargestellt ist. Auch bei diesem Verwendungsbeispiel wird die Reflexion der Rettungsinsel 40 durch das Einfügen einer Gitterstruktur an Einzelelementen 10 in das Gewebe des Rettungsinseldaches 43 deutlich verbessert.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

**Patentansprüche**

1. Radarerfaßbares Objekt (11) mit auf ihm in einer Richtung fortlaufend angeordneten, voneinander beabstandeten Einzelelementen (10) aus leitendem Material, deren Abstand in Abhängigkeit von der durch die Suchfrequenz eines Radargerätes bestimmten Wellenlänge der zu reflektierenden Radarstrahlung festgelegt ist, dadurch gekennzeichnet, daß der Abstand der Einzelelemente (10) beginnend mit der halben, der unteren Eckfrequenz des Suchfrequenzbandes des Radargerätes entsprechenden Wellenlänge nach einer geometrischen Reihe abnehmend bis zur halben, der oberen Eckfrequenz des Suchfrequenzbandes entsprechenden Wellenlänge bemessen ist.

2. Radarerfaßbares Objekt nach Anspruch 1, dadurch gekennzeichnet, daß zur Verschiebung der geometrischen Abstandsreihe zwischen den Einzelelementen (10) die Grenz-Wellenlängen ein ganzzahliges Vielfaches der halben, durch die jeweiligen Eckfrequenzen des Frequenzbandes festgelegten Wellenlänge betragen.

3. Radarerfaßbares Objekt nach Anspruch 1 oder 2, dadurch gekennzeichnet, daß auf dem einen Objekt (11) zwei Abfolgen von Einzelelementen (10) ineinander verschachtelt angeordnet sind, wobei jede einzelne Abfolge von Einzelelementen (10) in ihrem gegenseitigen Abstand der durch das zugeordnete Suchfrequenzband bestimmten geometrischen Reihe entspricht und für die Berechnung der Abstände der Einzelelemente (10) ein ganzzahliges Vielfaches der jeweiligen kleinsten und größten Wellenlänge des Suchfrequenzbandes zugrundegelegt ist.

4. Radarerfaßbares Objekt nach einem der Ansprüche 1 bis 3, dadurch gekennzeichnet, daß auf dem Objekt (11) zur Verbesserung seines Reflexionsverhaltens bei Schräganstrahlung und damit verbundenem Aspektwinkel weitere Einzelelemente (10) angeordnet sind, deren Abstand den der unteren Eckfrequenz des Suchfrequenzbandes entsprechenden Abstand übersteigt.

5. Radarerfaßbares Objekt nach Anspruch 6, dadurch gekennzeichnet, daß bezogen auf das der Berechnung der Abstände für die Einzelelemente (10) zugrundeliegende Suchfrequenzband eine dem zu erfassenden Grenz-Aspektwinkel entsprechende tiefere Eckfrequenz für die Abstandsberechnung festgelegt ist.

6. Radarerfaßbares Objekt nach einem der Ansprüche 1 bis 5, dadurch gekennzeichnet, daß die Einzelelemente (10) in gleicher Polarisation, das heißt im wesentlichen parallel zueinander, angeordnet sind.

7. Radarerfaßbares Objekt nach einem der Ansprüche 1 bis 6 mit einer gitterhaften Struktur der Einzelelemente (10), dadurch gekennzeichnet, daß wenigstens zwei jeweils gleich polarisierte Abfolgen von in ihrem der durch das zugeordnete Suchfrequenzband bestimmten geometrischen Reihe entsprechenden Abstand einander kreuzend in Überdeckung angeordnet sind.

8. Radarerfaßbares Objekt nach Anspruch 7, dadurch gekennzeichnet, daß der Kreuzungswinkel neunzig Grad beträgt.

9. Radarerfaßbares Objekt nach einem der Ansprüche 1 bis 8, dadurch gekennzeichnet, daß die Einzelelemente (10) auf dem Objekt (11) in ringförmigem Verlauf angeordnet sind.

10. Radarerfaßbares Objekt nach einem der Ansprüche 1 bis 9, dadurch gekennzeichnet, daß die Einzelelemente (10) auf der Oberfläche des Objektes (11) angeordnet sind.

11. Radarerfaßbares Objekt nach einem der Ansprüche 1 bis 9, dadurch gekennzeichnet, daß die Einzelelemente (10) auf einem aus nicht leitendem Grundgewebe bestehenden Träger angeordnet sind, der an dem radarzuerfassenden Objekt (11) befestigbar ist.

12. Radarerfaßbares Objekt nach einem der Ansprüche 1 bis 11, dadurch gekennzeichnet, daß das Objekt (11) eine Luftzieldarstellung ist.

13. Radarerfaßbares Objekt nach einem der Ansprüche 1 bis 11, dadurch gekennzeichnet, daß das Objekt (11) als Gefechtsziel-Luftschleppsack ausgebildet ist.

14. Radarerfaßbares Objekt nach einem der Ansprüche 1 bis 11, dadurch gekennzeichnet, daß das Objekt als Schleppfahne (20) ausgebildet ist.

15. Radarerfaßbares Objekt nach einem der Ansprüche 1 bis 11, dadurch gekennzeichnet, daß das Objekt als Schlepppfeil (25) ausgebildet ist.

16. Radarerfaßbares Objekt nach einem der Ansprüche 1 bis 11, dadurch gekennzeichnet, daß das Objekt als Fallschirmkappe (31) ausgebildet ist.

17. Radarerfaßbares Objekt nach einem der Ansprüche 1 bis 16. dadurch gekennzeichnet, daß das Objekt als Rettungsinsel (40) ausgebildet ist.

18. Radarerfaßbares Objekt nach einem der Ansprüche 1 bis 11, dadurch gekennzeichnet, daß das Objekt als Kornerreflektor (35) ausgebildet ist.

## Claims

1. A radar-detectable object (11) with individual elements (10) of conductive material spaced from each other and arranged on said object continuously in one direction, the spacing of which is fixed in dependence on the wavelength of the radar radiation to be reflected, said wavelength being determined by the search frequency of a radar apparatus, characterised in that the spacing of the individual elements (10) is calculated beginning with half the wavelength corresponding to the lower cut-off frequency of the search frequency band of the radar apparatus according to a geometric progression decreasing to half the wavelength corresponding to the upper cut-off frequency of the search frequency band.

2. A radar-detectable object according to claim 1, characterised in that for displacing the geometric spacing progression between the individual elements (10) the boundary wavelengths are an integral multiple of half the wavelength, fixed through the respective cut-off frequencies of the frequency band.

3. A radar-detectable object according to claim 1 or 2, characterised in that arranged on the one object (11) there are two sequences of individual elements (10) interlaced into each other, each individual sequence of individual elements (10) corresponding in its mutual spacing to the geometric progression determined by the associated search frequency band and the basis for calculating the spacing of the individual elements (10) being an integral multiple of the respective smallest and largest wavelength of the search frequency band.

4. A radar-detectable object according to one of claims 1 to 3, characterised in that arranged on the object (11) for improving its reflecting characteristics with oblique radiation and the aspect angle connected therewith there are further individual elements (10), the spacing of which exceeds the spacing corresponding to the lower cut-off frequency of the search frequency band.

5. A radar-detectable object according to claim 6, characterised in that, relating to the search frequency band which is the basis of the calculation of the spacing of the individual elements (10), a lower cut-off frequency corresponding to the boundary aspect angle to be detected is fixed for calculating the spacing.

6. A radar-detectable object according to one of claims 1 to 5, characterised in that the individual elements (10) are arranged with the same polarisation, i.e. substantially parallel to each other.

7. A radar-detectable object according to one of claims 1 to 6, with a grid-like structure of the individual elements (10), characterised in that at least two in each case identically polarised sequences [of individual elements], corresponding in their spacing to the geometrical progression determined by the associated search frequency band, are arranged overlapping and crossing each other.

8. A radar-detectable object according to claim 7, characterised in that the angle of crossing is ninety degrees.

9. A radar-detectable object according to one of claims 1 to 8, characterised in that the individual elements (10) are arranged on the object (11) in annular progression.

10. A radar-detectable object according to one of claims 1 to 9, characterised in that the individual elements (10) are arranged on the surface of the object (11).

11. A radar-detectable object according to one of claims 1 to 9, characterised in that the individual elements (10) are arranged on a carrier consisting of a non-conductive base fabric, which carrier is secured to the object (11) to be detected by radar.

12. A radar-detectable object according to one of claims 1 to 11, characterised in that the object (11) represents an aerial target.

13. A radar-detectable object according to one of claims 1 to 11, characterised in that the object (11) is formed as an air-towed sleeve military target.

14. A radar-detectable object according to one of claims 1 to 11, characterised in that the object is formed as a towed flag (20).

15. A radar-detectable object according to one of claims 1 to 11, characterised in that the object is formed as a towed arrow (25).

16. A radar-detectable object according to one of claims 1 to 11, characterised in that the object is formed as a parachute canopy (31).

17. A radar-detectable object according to one of claims 1 to 16, characterised in that the object is formed as a life raft (40).

18. A radar-detectable object according to one of claims 1 to 11, characterised in that the object is formed as a Korner reflector (35).

**Revendications**

1. Objet détectable par radar (11), revêtu d'éléments spécifiques (10), disposés de façon continue dans une direction, espacés les uns des autres et en matériau conducteur, dont l'espacement est fixé en fonction de la longueur d'onde, déterminée par la fréquence chercheuse du rayonnement radar à réfléchir, d'un appareil radar, caractérisé en ce que l'espacement entre les éléments spécifiques (10) va en diminuant selon une série à raison géométrique, en commençant avec la moitié de la longueur d'onde qui correspond à la fréquence de coupure inférieure de la bande de fréquence chercheuse de l'appareil radar, jusqu'à la moitié de la longueur d'onde correspondant à la fréquence de coupure supérieure de la bande de fréquence chercheuse.

2. Objet détectable par radar selon la revendication 1, caractérisé en ce que, pour pouvoir décaler la série espacée géométrique entre les éléments spécifiques (10), les longueurs d'onde limite ont pour valeur un entier multiple de la moitié de la longueur d'onde, déterminée par la fréquence de coupure respective de la bande de fréquence.

3. Objet détectable par radar selon la revendication 1 ou 2, caractérisé en ce que, sur un objet (11), sont disposées deux successions d'éléments spécifiques (10), imbriquées les unes dans les autres, où l'espacement réciproque dans chaque succession d'éléments spécifiques (10) correspond à la série géométrique déterminée par la bande de fréquence chercheuse associée et où l'on prend pour base pour le calcul des espacements entre les éléments spécifiques (10) un entier multiple de la longueur d'onde chaque fois la plus petite et la plus grande de la bande de fréquence chercheuse.

4. Objet détectable par radar selon l'une des revendications 1 à 3, caractérisé en ce que, pour améliorer le comportement en réflexion de l'objet (11) en cas d'irradiation oblique et d'angle d'aspect afférent, sont appliqués sur l'objet (11) d'autres éléments spécifiques (10) dont l'espacement dépasse l'espacement qui correspond à la fréquence de coupure inférieure de la bande de fréquence chercheuse.

5. Objet détectable par radar selon la revendication 4, caractérisé en ce que, par rapport à la bande de fréquence chercheuse prise pour base au calcul des espacements des éléments spécifiques (10), une fréquence de coupure plus basse, correspondant à l'angle d'aspect limite à mesurer, est fixée pour le calcul des espacements.

6. Objet détectable par radar selon l'une des revendications 1 à 5, caractérisé en ce que les éléments spécifiques (10) sont disposés dans une polarisation identique, c'est-à-dire pratiquement parallèles entre eux.

7. Objet détectable par radar selon l'une des revendications 1 à 6, avec une structure en grille des éléments spécifiques (10), caractérisé en ce qu'au moins deux successions, chaque fois polarisées de façon identique sont disposées en recouvrement en se croisant mutuellement avec leur espacement correspondant à la série géométrique déterminée par la bande de fréquence chercheuse associée.

8. Objet détectable par radar selon la revendication 7, caractérisé en ce que l'angle de croisement est de quatre vingt dix degrés.

9. Objet détectable par radar selon l'une des revendications 1 à 8, caractérisé en ce que les éléments spécifiques (10) sont disposés sur l'objet (11) avec une allure annulaire.

10. Objet détectable par radar selon l'une des revendications 1 à 9, caractérisé en ce que les éléments spécifiques (10) sont disposés sur la surface de l'objet (11).

11. Objet détectable par radar selon l'une des revendications 1 à 9, caractérisé en ce que les éléments spécifiques (10) sont disposés sur un support, composé d'un tissu de base, non conducteur, et susceptible d'être fixé sur l'objet (11) à détecter par radar.

12. Objet détectable par radar selon l'une des revendications 1 à 11, caractérisé en ce que l'objet (11) est une représentation de cible aérienne.

13. Objet détectable par radar selon l'une des revendications 1 à 11, caractérisé en ce que l'objet (11) est réalisé sous forme d'une cible militaire se présentant sous la forme d'un sac aérien remorqué.

14. Objet détectable par radar selon l'une des revendications 1 à 11, caractérisé en ce que l'objet est réalisé sous la forme d'un drapeau remorqué (20).

15. Objet détectable par radar selon l'une des revendications 1 à 11, caractérisé en ce que l'objet est réalisé sous la forme d'une flèche remorquée (25).

16. Objet détectable par radar selon l'une des revendications 1 à 11, caractérisé en ce que l'objet est réalisé sous la forme d'une voilure de parachute (31).

17. Objet détectable par radar selon l'une des revendications 1 à 16, caractérisé en ce que l'objet est réalisé sous la forme d'un îlot de sauvetage (40).

18. Objet détectable par radar selon l'une des revendications 1 à 11, caractérisé en ce que l'objet est réalisé sous la forme d'un réflecteur granuleux (35).

Fig.1a

Fig.1b

EP 0 176 994 B1

Fig. 2

EP 0 176 994 B1

Fig. 3

Fig. 4

31

10

30

Fig. 5

35

36

10

Fig. 6

Fig. 7